# EUROPÄISCHE PATENTSCHRIFT

(11) **EP 0 783 622 B1**
(45) Veröffentlichungstag und Bekanntmachung des Hinweises auf die Patenterteilung: **22.05.2002**
(21) Anmeldenummer: 96902883.6
(22) Anmeldetag: 23.02.1996
(51) Int. Cl.: F02B 43/04

(54) **VERFAHREN UND VORRICHTUNG ZUR BILDUNG EINES TURBULENTEN KRAFTSTOFF-LUFT-GEMISCHES IM VERBRENNUNGSRAUM JEDES ZYLINDERS EINES VENTILGESTEUERTEN VERBRENNUNGSMOTORS**
PROCESS AND DEVICE FOR FORMING A TURBULENT FUEL-AIR MIXTURE IN THE COMBUSTION CHAMBER OF EACH CYLINDER OF A VALVE-CONTROLLED INTERNAL COMBUSTION ENGINE
PROCEDE ET DISPOSITIF DE FORMATION D'UN MELANGE TURBULENT D'AIR ET DE CARBURANT DANS LA CHAMBRE DE COMBUSTION DE CHAQUE CYLINDRE D'UN MOTEUR A COMBUSTION INTERNE COMMANDE PAR SOUPAPES

(30) Priorität: 09.03.1995 CH 67695
(43) Veröffentlichungstag der Anmeldung: 16.07.1997
(73) Patentinhaber: ROBERT BOSCH GMBH, 70442 Stuttgart (DE)
(72) Erfinder: JANACH, Walter, CH-6048 Horw (CH)
(86) Internationale Anmeldenummer: DE9600281
(87) Internationale Veröffentlichungsnummer: WO9628649

(56) Entgegenhaltungen:
- EP-A- 0 510 585
- DE-A- 3 731 986
- FR-A- 2 548 278
- US-A- 5 101 794
- US-A- 5 150 685
- US-A- 5 237 981
- INTERNATIONAL JOURNAL OF HYDROGEN ENERGY, Bd. 11, Nr. 11, 1.November 1986, OXFORD GB, Seiten 721-728, XP002005562 PESCHKA: "Liquid Hydrogen fueled automotive Vehicles in Germany-Status and Development"
- S GAUTHIER: "natural gas vehicle developments--a gas industry and original equipment manufacturer cooperative effort" 17.August 1990 , AMERICAN INSTITUTE OF CHEMICAL ENGINEERS , NEW YORK XP000214886 siehe Seite 236, linke Spalte, Absatz 1; Abbildung 2

## Beschreibung

Verfahren und Vorrichtung zur Bildung eines turbulenten Kraftstoff-Luft-Gemisches im Verbrennungsraum jedes Zylinders eines ventilgesteuerten Verbrennungsmotors

Die Erfindung betrifft ein Verfahren zur Bildung eines turbulenten Kraftstoff-Luft-Gemisches im Verbrennungsraum jedes Zylinders eines ventilgesteuerten Verbrennungsmotors gemäss dem Oberbegriff des Patentanspruches 1, sowie eine Vorrichtung zur Durchführung dieses Verfahrens, gemäss dem Oberbegriff des Patentanspruches 7.

Der Betrieb von Verbrennungsmotoren mit gasförmigen Kraftstoffen erfordert entsprechend angepasste Einrichtungen und Mischverfahren zur Bildung eines Kraftstoff-Luft-Gemisches, sowie zur Zuführung dieses Gemisches zum Verbrennungsraum in den Zylindern des Verbrennungsmotors. Der gasförmige Kraftstoff wird dabei zumeist vor dem Verbrennungsraum im Bereiche der Lufteinlasskanäle mit der Luft vermischt und strömt dann beim Ansaugtakt in den oder die Verbrennungsräume des Verbrennungsmotors. Aus EP 309 044 B1 ist eine derartige Misch- und Regeleinrichtung bekannt, welche in der Motorluft-Ansaugleitung angeordnet ist. Dabei werden Luft und gasförmiger Kraftstoff in einer sogenannten Venturi-Düse gemischt, und dieses Kraftstoff-Luft-Gemisch strömt dann in bekannter Weise in den Motor. Wie aus dieser bekannten Einrichtung ersichtlich ist, ist die Regelung des Mischverhältnisses relativ aufwendig und schwierig, und es ist trotzdem nicht gewährleistet, dass eine vollständige und gleichmässige Durchmischung von Luft und gasförmigem Kraftstoff erfolgt. Dies hat dann zur Folge, dass die Verbrennung des Gemisches im Verbrennungsraum des Motors ungleichmässig erfolgt, und dadurch keine optimale Energieausnutzung möglich ist und unerwünschte Schadstoffe entstehen. Um eine zweckmässige Verbrennung des Gas-Luft-Gemisches im Verbrennungsraum zu gewährleisten, sind deshalb zusätzliche Massnahmen notwendig, welche zum Ziel haben, das Gemisch in eine turbulente Strömung zu versetzen, welche eine vollständige Durchmischung und rasche Verbrennung zur Folge haben soll. Zusätzliche Turbulenz entsteht, wie bekannt dadurch, dass der Gemischstrom am Ende des Einlasskanales durch den Ringspalt zwischen dem Ventil und dem Ventilsitz am Zylinderkopf strömt, wodurch ein kegelförmiger Gemischstrahl entsteht. Eine weitere Erhöhung der Turbulenz ist in bekannter Weise dadurch möglich, dass durch eine geeignete Form des Einlasskanales oder durch Einbauten vor dem Einlassventil dem in den Zylinder strömenden Gemischstrom ein Drall erteilt wird. Im weiteren wird in den Zylindern moderner Motoren auch eine sogenannte Quetschströmung erzeugt, indem bei der Annäherung des Kolbens an den oberen Totpunkt zwischen dem Kolben und dem Zylinderkopf ein sich verengender Spalt gebildet, und das Gemisch aus diesem heraus in eine zentrale Brennmulde gequetscht wird. Auch dies hat eine zusätzliche Erhöhung der Turbulenz zur Folge. Alle diese bekannten Massnahmen zur Erhöhung der Turbulenz im Verbrennungsraum weisen den Nachteil auf, dass sich die Intensität der Turbulenz etwa proportional zur Motordrehzahl ändert. Dies ist eine Folge davon, dass sich die Geschwindigkeit der Luft-, Gas- und Gemischströme bei sich ändernden Motordrehzahlen ebenfalls ändert. Bei tiefen Drehzahlen ist deshalb die Turbulenz schwach und die Verbrennung entsprechend schlecht. Dies ist besonders ausgeprägt bei Verwendung von Erdgas als Kraftstoff und/oder bei magerem Gemisch. Bei hohen Drehzahlen sind die Strömungsgeschwindigkeiten jedoch so hoch, dass die Zündung und Entflammung des Gemisches erschwert wird. Bei hohen Drehzahlen, bzw. hohen Strömungsgeschwindigkeiten, verursacht eine intensive Drallströmung durch das Einlassventil zusätzlich einen hohen Druckverlust, was die Füllung der Zylinder und damit die Leistung vermindert. Um diese Nachteile auszugleichen, müssen bei Verbrennungsmotoren mit gasförmigen Kraftstoffen der bekannten Bauweise zumeist Kompromisse eingegangen werden, oder es müssen zusätzliche komplizierte und aufwendige Massnahmen zum Ausgleich dieser Nachteile ergriffen werden.

Bekannt ist bereits aus der Veröffentlichung "Proceedings of the 25^{th} Intersociety Energy Conversion Engineering Conference" Volume 6 (IECEC-90, August 12-17, 1990, Reno, Nevada), American Institute of Chemical Engineers New York, der Artikel "Natural Gas Vehicle Developments" des Gas Research Institutes, in dem eine mit Naturgas betriebene Brennkraftmaschine, die nach dem Schichtladungskonzept arbeitet, erwähnt ist. Aus dieser Veröffentlichung geht hervor, dass im Ansaugtakt der Brennkraftmaschine bei geöffnetem Einlassventil in einer ersten Phase Ansaugluft über ein Ansaugrohr in den Brennraum angesaugt wird, während in einer zweiten Phase des Ansaugtakts zusätzlich noch Gas aus einem Gaseinspritzventil in den Brennraum eingespritzt bzw. eingeblasen wird. In Folge der Gaseinspritzung wird im Brennraum ein Gas-Luft-Gemisch gebildet. In der Kompressionsphase wird in Hubabhängigkeit des Kolbens die im Brennraum befindliche Füllluft weiter in die Schicht des Gas-Luft-Gemisches hineinverschoben.

Der vorliegenden Erfindung liegt die Aufgabe zugrunde, ein Verfahren und eine Vorrichtung zu schaffen, welche bei Verbrennungsmotoren mit gasförmigen Kraftstoffen, z.B. Erdgas oder Flüssiggas, eine hohe Turbulenz des Gemisches im Verbrennungsraum erzeugen. Die Intensität der Turbulenz soll dabei, unabhängig von der Motorendrehzahl, möglichst konstant sein, wobei einfache Mittel zur Anwendung gelangen sollen. Die Zuführung des gasförmigen Kraftstoffes soll eine gute und einfache Steuerung und Regelung der Gemischbildung sowie der Motorenfunktion zulassen. Im weiteren soll der Einsatz von gasförmigen Kraftstoffen mit möglichst geringen Aenderungen an herkömmlichen Motoren möglich sein, und die für die Zuführung des gasförmigen Kraftstoffes notwendigen Elemente sollen vor übermässigen Belastungen, z.B. Hitze und Druck, geschützt sein und eine entsprechend hohe Lebensdauer aufweisen.

Diese Aufgabe wird erfindungsgemäss durch ein Verfahren nach Patentanspruch 1 und eine Vorrichtung nach Patentanspruch 7 gelöst. Vorteilhafte Weiterbildungen der Erfindungen ergeben sich nach den Merkmalen der abhängigen Patentansprüche.

Bei der erfindungsgemässen Lösung ergeben sich Vorteile daraus, dass der gasförmige Kraftstoff und die Luft erst nach dem Einlassventil im Verbrennungsraum jedes Zylinders eines Verbrennungsmotors gemischt werden. Die Einbringung des gasförmigen Kraftstoffes erfolgt über eine ventilgesteuerte Gasdüse, welche im Bereiche des Einlasskanales, d.h. ausserhalb des heissen Verbrennungsraumes des Motors, angeordnet ist. Die thermischen Belastungen der Gasdüse lassen sich deshalb in annehmbaren Grenzen halten, und es können deshalb entsprechend hohe Lebensdauern erwartet werden. Der Druck, unter welchem der gasförmige Kraftstoff normalerweise gespeichert wird, ist genügend hoch, um in der entsprechend gestalteten Gaseinblasdüse einen Gasstrahl mit hoher Geschwindigkeit zu erzeugen. Als Folge der im Vergleich zu flüssigem Benzin sehr kleinen Dichte und der Kompressibilität von Gas wird beim Eindüsen gasförmiger Kraftstoffe im engsten Querschnitt Schallgeschwindigkeit erreicht. Die Geschwindigkeit kann in einem als Laval-Düse ausgebildeten Austrittskanal noch gesteigert werden. Damit kann bereits bei den üblichen Gasdrücken von wenigen bar, z.B. 5 bis 10 bar, ein kohärenter Gasstrahl mit einer Strömungsgeschwindigkeit von 250 - 600 m/s erzeugt werden. Unter einem kohärenten Gasstrahl wird dabei ein Gasstrahl verstanden, welcher im wesentlichen nicht divergiert und somit einen gleichbleibenden Querschnitt aufweist. Die kinetische Energie eines solchen Gasstrahles ist um ein Vielfaches grösser als diejenige eines Benzinstrahles bei gleichem Druck. Die kinetische Energie des Kraftstoffstrahles bei Gas erreicht etwa die gleiche Grössenordnung wie die kinetische Energie der gesamten Luftströmung durch das Einlassventil bei hoher Drehzahl. Diese hohe kinetische Energie des Gasstrahles wird gemäss der Erfindung dazu ausgenutzt, im Verbrennungsraum eine möglichst hohe Turbulenz zu erzeugen. Dazu wird der kohärente Gasstrahl durch den Ringspalt eines geöffneten Einlassventils direkt in den Verbrennungsraum eingeblasen, wo sich der Strahl aus gasförmigem Kraftstoff als Folge der freiwerdenden kinetischen Energie intensiv mit der eingeströmten Luft vermischt und verwirbelt.

Der Gasstrahl wird dabei intermitierend, bzw. gepulst eingeblasen, wobei der Zeitpunkt jedes Einblaspulses von gasförmigem Kraftstoff vom Oeffnen des Ringspaltes am Einlassventil abhängig ist. Die Gaseinblasdüse ist deshalb vorteilhaft mit einem Ventil versehen, welches in bekannter Weise elektromagnetisch oder anderweitig betätigt werden kann. Die vom Motor benötigte Kraftstoffmenge kann in zweckmässiger Weise durch Veränderung der Zeitdauer des Gasstrahlpulses geregelt werden. Dies ermöglicht die Anwendung von Regelverfahren, wie sie bei Benzineinspritzungen angewendet werden. Weitere Vorteile können sich ergeben, wenn die Richtung der Achse des Gasstrahles im Verhältnis zur Zentralachse des Verbrennungsraumes entsprechend gewählt wird, und dabei der Gasstrahl schräg und/oder exzentrisch zur Längsachse des Verbrennungsraumes eingeblasen wird. Dies ermöglicht die Erzeugung einer zusätzlichen Drallströmung im Verbrennungsraum, was eine weitere Intensivierung der Turbulenz zur Folge hat. Zusätzliche Vorteile ergeben sich dadurch, dass die Geschwindigkeit des eingeblasenen Gasstrahles von der Motordrehzahl unabhängig ist, und deshalb auch bei tiefen Drehzahlen des Motors eine intensive Turbulenz im Brennraum ermöglicht wird. Dies hat zur Folge, dass auf ergänzende Massnahmen zur Turbulenzerzeugung teilweise oder ganz verzichtet werden kann, und damit die Konstruktion und Anordnung, sowie das Verfahren zum Einblasen des gasförmigen Kraftstoffes, vereinfacht wird. Bei Bedarf ist es auch möglich, durch eine zeitliche Verschiebung des Gaspulses gegenüber der Oeffnungsdauer des Einlassventils nur einen Teil der Menge des gasförmigen Kraftstoffes auf direktem Weg in den Verbrennungsraum des Zylinders einzublasen. Bei Vorverschiebung des Gaspulses kann ein Teil des Kraftstoffes im Einlasskanal vorgelagert werden und gelangt dann zusammen mit der Luft sofort beim Oeffnen des Einlassventils in den Zylinder. Ein derartiger Betrieb kann bei hoher Drehzahl und grosser Last zweckmässig sein, weil bei hoher Drehzahl die Turbulenz der einströmenden Luft ohnehin intensiver ist. Für besonders hohe Leistungsanforderungen ist es möglich, mehr als eine Gaseinblasdüse anzuordnen, wobei das Einblasen der Gasstrahlen in den Verbrennungsraum durch ein oder mehrere Einlassventile erfolgen kann. Diese Anordnung ermöglicht zusätzliche Anpassungen an unterschiedliche Leistungs- und Betriebsanforderungen eines Motors. Besonders vorteilhaft ist dabei, dass in jedem Falle die Gaseinblasdüsen ausserhalb des Verbrennungsraumes des Motors angeordnet sind, und auch eine Kombination mit vorgelagerten Kraftstoffzumischungen möglich ist. Derartige vorgelagerte Kraftstoffzumischungen können dabei in bekannter Weise ausgestaltet sein.

Im folgenden wird die Erfindung anhand von Ausführungsbeispielen, unter Bezugnahme auf die beiliegenden Zeichnungen, näher erläutert. Es zeigen:
- Fig. 1: einen Ausschnitt aus dem Einlassbereich eines Zylinders eines Verbrennungsmotors, in schematischer Darstellung, und
- Fig. 2: einen Querschnitt durch einen Einlasskanal mit zwei Gaseinblasdüsen, in schematischer Darstellung.

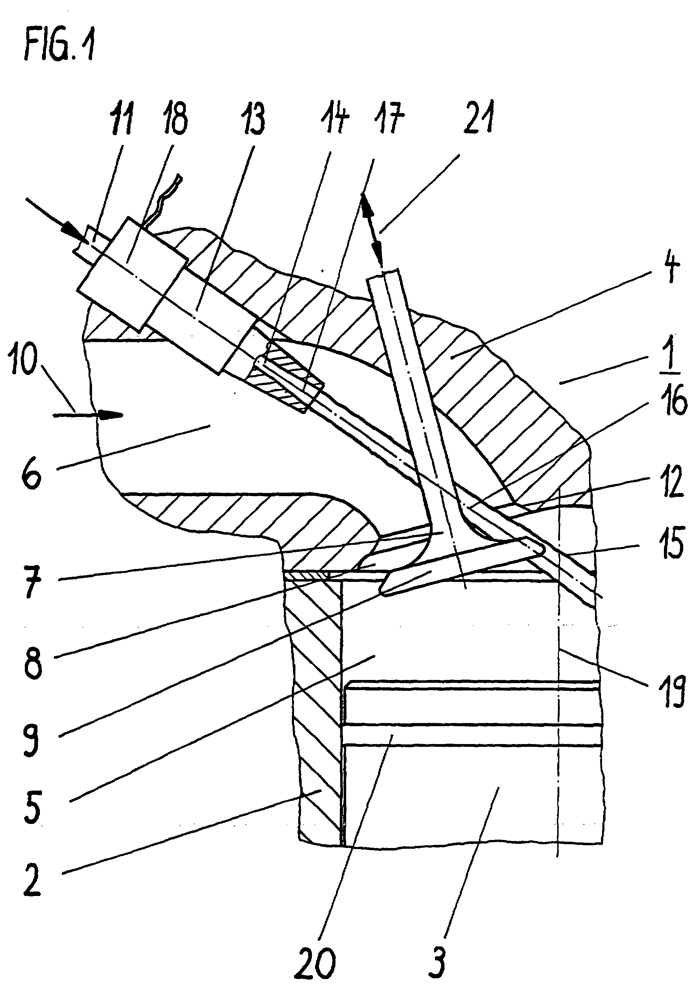

Der in Fig. 1 dargestellte Ausschnitt aus einem Verbrennungsmotor 1 zeigt nur einen Teilschnitt im Bereiche eines Einlassventils 7 und des oberen Endes eines Zylinders 2. Im Zylinder 2 ist ein Kolben 3 mit einer Kolbendichtung 20 angeordnet. Im oberen Bereich des Zylinders 2 befindet sich der Verbrennungsraum 5 mit der Längsachse 19, welche auch gleichzeitig die Längsachse des Kolbens 3 ist. Auf dem Zylinder 2 ist ein Zylinderkopf 4 angeordnet, welcher in bekannter Weise mit einem Einlasskanal 6 für die Luftzuführung in Richtung des Pfeiles 10, sowie mit einem nicht dargestellten Auslasskanal ausgestattet ist. Zylinder 2, Kolben 3, Zylinderkopf 4, und die zugehörigen Ein- und Auslasskanäle, sowie Ventile, sind in bekannter Weise ausgebildet, d.h. der ganze Motor 1 entspricht einer üblichen Anordnung. Es können mehrere Zylinder 2 vorhanden sein und pro Zylinder 2 auch mehrere Einlasskanäle 6 und Einlassventile 7, sowie mehrere Auslasskanäle und Auslassventile. Das Einlassventil 7 ist im offenen Zustand dargestellt, wobei zwischen dem Ventilteller 9 und dem Ventilsitz 12 am Zylinderkopf 4 ein Ringspalt 8 gebildet ist. Die Bewegungen des Ventils 7 in Richtung der Pfeile 21 werden in bekannter Weise in Abhängigkeit von der Kolbenbewegung, bzw. den Verbrennungsvorgängen im Verbrennungsraum 5 gesteuert. Vor dem Ventilsitz 12 am Ende des Einlasskanales 6, ist am Einlasskanal 6 eine Gaseinblasdüse 13 angeordnet. Diese Gaseinblasdüse 13 verfügt über eine Zuleitung 11 für gasförmigen Kraftstoff, z.B. Erdgas oder Flüssiggas und ist mit einem Magnetventil 18 zur Freigabe und Unterbrechung des Gasflusses ausgestattet. Am vorderen Ende der Gaseinblasdüse 13 ist ein Austrittskanal 14 angeordnet, welcher in den Einlasskanal 6 gerichtet ist. Aus diesem Austrittskanal 14 tritt ein Gasstrahl 15 in den Einlasskanal 6 aus, wobei die Strömungsachse 16 des Gasstrahles 15 durch den Ringspalt 8 des geöffneten Ventils 7 verläuft und direkt in den Verbrennungsraum 5 gerichtet ist. Zur Erhöhung der Austrittsgeschwindigkeit des Gasstrahles 15 aus der Gaseinblasdüse 13 ist der Endbereich 17 des Austrittskanales 14 als Laval-Düse ausgebildet und in an sich bekannter Weise auf den Druck des zuströmenden Gases abgestimmt. Der Gasstrahl 15 tritt mit einer Geschwindigkeit von ca. 250 - 600 m/s aus dem Endbereich 17 des Austrittskanales 14 aus und weist eine kohärente Struktur auf. Die kohärente Struktur ist dabei so zu verstehen, das der Gasstrahl 15 beim Einblasen in den Verbrennungsraum 5 auf seinem Wege entlang der Strömungsachse 16 keine wesentliche Querschnittsvergrösserung erfährt und sich insbesondere im Bereiche des Einlasskanales 6 möglichst wenig mit der durch den Einlasskanal 6 strömenden Luft vermischt. Die kohärente Form des Gasstrahles 15 gewährleistet, dass der Gasstrahl 15 den Ringspalt 8 an der gewünschten Stelle durchströmt und keine unerwünschte Abbremsung durch Kontakte mit dem Ventilteller 9 oder den Wandbereichen des Ventilsitzes 12 auftritt.

Infolge der hohen Geschwindigkeit von 250 - 600 m/s des am Austrittskanal 14 austretenden Gasstrahles 15 enthält dieser Gasstrom eine sehr hohe kinetische Energie. Durch die kohärente Form des Gasstrahles 15 bleibt diese hohe kinetische Energie erhalten, bis der Gasstrahl 15 in den Verbrennungsraum 5 eintritt. Im Verbrennungsraum 5 wird der Gasstrahl 15 durch Wandaufprall aufgefächert und aufgelöst, und die im Gasstrahl 15 enthaltene hohe kinetische Energie erzeugt eine hohe Turbulenz und damit eine sehr gute Vermischung des gasförmigen Kraftstoffes aus dem Gasstrahl 15 mit der Luft im Verbrennungsraum 5. Diese hohe Turbulenz wird nicht nur durch den Gasstrahl 15, sondern auch durch die über den Ringspalt 8 in den Verbrennungsraum 5 einströmende Luft erwirkt, da diese Luft kegelförmig in den Verbrennungsraum 5 einströmt und ebenfalls eine erhöhte Strömungsgeschwindigkeit aufweist. Die Strömungsgeschwindigkeit der aus dem Einlasskanal 6 in den Verbrennungsraum 5 einströmenden Luft ist von der Drehzahl des Motors, bzw. der Hubgeschwindigkeit des Kolbens 3 abhängig. Demgegenüber ist jedoch die Strömungsgeschwindigkeit des Gasstrahles 15 unabhängig von der Motorendrehzahl. Die hohe Turbulenz und die gute Vermischung zwischen gasförmigem Kraftstoff und Luft ist deshalb bei dieser erfindungsgemässen Art der Einblasung des gasförmigen Kraftstoffes in den Verbrennungsraum 5 über den gesamten Drehzahlbereich des Verbrennungsmotors 1 gewährleistet. Die hohe Turbulenz und gute Vermischung bleibt auch bei niederen Drehzahlen gewährleistet.

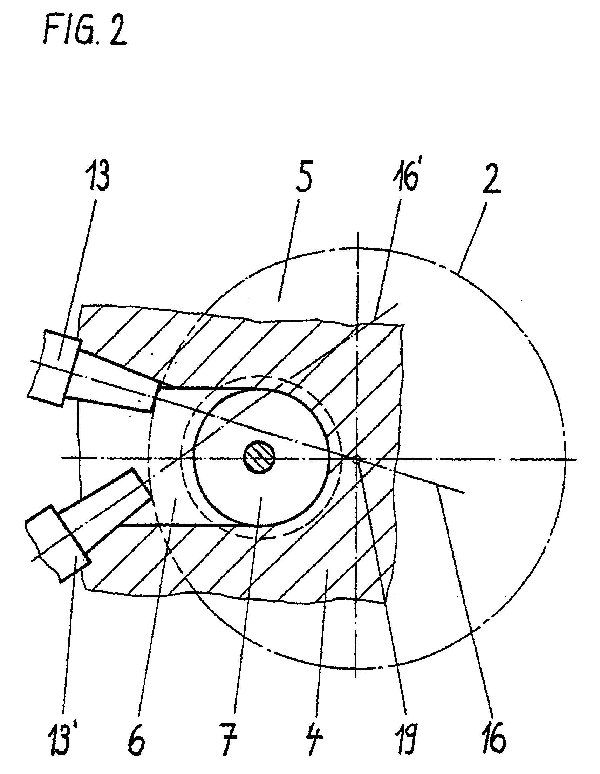

Fig. 2 zeigt in vereinfachter und schematischer Darstellung eine Aufsicht auf den Einlassbereich des Einlasskanales 6 an einem Zylinder 2. Die Anordnung ist an sich gleich ausgebildet, wie in Fig. 1 dargestellt, wobei jedoch zwei Gaseinblasdüsen 13 bzw. 13', angeordnet sind. Diese Anordnung kann zweckmässig sein, wenn der benötigte gasförmige Kraftstoff auf zwei Düsen verteilt werden soll, wobei in diesem Falle, in Abhängigkeit vom Betriebszustand des Verbrennungsmotors 1, auch die Zu- oder Abschaltung einer der beiden Düsen möglich ist. In Fig. 2 ist auch erkennbar, dass durch die Ausrichtung der Strömungsachsen 16 bzw. 16', des Gasstrahles 15 die Strömung im Verbrennungsraum 5 am Zylinder 2 beeinflusst werden kann. Die Strömungsachse 16 der Gasdüse 13 verläuft durch den Ringspalt 8 des Ventils 7, und nach dem Eintritt in den Verbrennungsraum 5 durch die Längsachse 19 des Verbrennungsraumes 5. In Abweichung davon wird die Strömungsachse 16' der Gaseinblasdüse 13' nach dem Durchtritt durch den Ringspalt 8 am Einlassventil 7 exzentrisch zur Längsachse 19 des Verbrennungsraumes 5 in diesen eingeführt. Diese Ausrichtung der Strömungsachsen 16 bzw. 16', in bezug zur Längsachse 19, lässt sich in einem weiten Bereiche variieren und an die spezielle konstruktive Ausgestaltung bestimmter Formen der Kolben 3, bzw. des Verbrennungsraumes 5 anpassen. Dazu ist es auch möglich, den Austrittskanal 14, bzw. dessen Längsachse gegenüber der Längsachse der Gaseinblasdüse 13 abzuwinkeln. Dadurch lassen sich in einfacher Weise bereits vorhandene Bohrungen für die Montage der Düsen verwenden. Die Anpassung erfolgt über die Ausrichtung des Austrittskanales 14. Die Anordnung der Gaseinblasdüse 13 behindert dabei die Strömungs- und Verbrennungsvorgänge im Verbrennungsraum 5 in keiner Weise, da sie ausserhalb des Verbrennungsraumes 5 im Einlasskanal 6 angeordnet ist. Die Gaseinblasdüse 13 ist deshalb auch vor übermässigen Belastungen und Beschädigungen durch die Verbrennungswärme und den hohen Druck geschützt, was zu einer grösseren Betriebssicherheit und Lebensdauer führt.

Die Bildung eines turbulenten Kraftstoff-Luft-Gemisches im Verbrennungsraum 5 erfolgt nach dem erfindungsgemässen Verfahren erst im Verbrennungsraum 5 des Zylinders 2. Der gasförmige Kraftstoff wird der Gaseinblasdüse 13 über die Kraftstoffzuleitung 11 unter dem für den gewählten Kraftstoff zweckmässigen Druck, von z.B. 5 bis 10 bar, zugeführt. Wenn das Einlassventil 7 beim Ansaugtakt des Kolbens 3 öffnet, wird der Ringspalt 8 freigegeben, und aus dem Einlasskanal 6 strömt über die Luftzuführung 10 Luft in den Verbrennungsraum 5. Im geeigneten Moment gibt das Magnetventil 18 an der Gaseinblasdüse 13 den Zufluss von gasförmigem Kraftstoff aus der Kraftstoffzuführung 11 frei, und im Austrittskanal 14 an der Gaseinblasdüse 13 wird der kohärente Gasstrahl 15 gebildet. Dieser Gasstrahl 15 wird nun praktisch ohne Vermischung mit der zuströmenden Luft durch den Endbereich des Einlasskanales 6 geblasen und durch den Ringspalt 8 am offenen Einlassventil 7 in den Verbrennungsraum 5 eingeblasen. Erst hier vermischt sich der gasförmige Kraftstoff, welcher im Gasstrahl 15 enthalten ist, mit der Luft, wobei die hohe kinetische Energie des Gasstrahles 15, in Verbindung mit der Eintrömgeschwindigkeit der Luft, für eine intensive Durchmischung und Turbulenz sorgen, wodurch eine optimale Gemischbildung gewährleistet wird. Abhängig von der Bewegung des Einlassventils 7, bzw. der Ventil- oder Motorsteuerung, unterbricht das Magnetventil 18 an der Gaseinblasdüse 13 den Gasstrom nach einer bestimmten Zeit, sodass synchron zu den Bewegungen des Einlassventils 7 ein intermitierender oder pulsierender Gasstrahl 15 gebildet wird. Sofern dies der Mischungs- und Verbrennungsablauf erfordert, kann der Beginn des Einblasens des Gasstrahles 15 auch gestartet werden, bevor das Ventil 7 den Ringspalt 8 öffnet. In diesem Falle erfolgt im Einlasskanal 6 eine Vormischung zwischen Luft und gasförmigem Kraftstoff, was für bestimmte Betriebszustände des Verbrennungsmotors zweckmässig sein kann. Es ist auch möglich, den Gasstrahl 15 erst nach dem Schliessen des Ventils 7 zu unterbrechen, sodass eine Steuerung der Zuführung von gasförmigem Kraftstoff, bzw. dessen Vermischung mit der zugeführten Luft, in einem weiten Bereiche möglich ist. Das erfindungsgemässe Verfahren und die entsprechende Anordnung ermöglicht dies, weil der erzeugte Gasstrahl 15 sowohl durch den Endbereich des Einlasskanales 6, wie auch direkt in den Verbrennungsraum 5 eingeblasen wird.

Sowohl bei der Anordnung von einer Gaseinblasdüse 13, oder auch bei der Anordnung von mehreren Düsen 13, 13' pro Einlasskanal 6, kann jede Gaseinblasdüse 13 auch mehrere, z.B. zwei, Austrittskanäle 14 aufweisen. Werden die Strömungsachi sen 16 dieser beiden Austrittskanäle 14 verschieden ausgerichtet, so kann die Turbulenz im Verbrennungsraum 5 zusätzlich erhöht und die Vermischung noch verbessert werden. Es ist auf diese Weise aber auch möglich, zusätzlich auf den Ablauf der Verbrennung im Verbrennungsraum 5 Einfluss zu nehmen. Das erfindungsgemässe Verfahren und die entsprechende Vorrichtung lassen es auch zu, dass im Einlasskanal 6 der Gaseinblasdüse 13 weitere Einrichtungen zur Beimischung von Kraftstoff zur Luft vorgelagert werden. Dies kann dann zweckmässig sein, wenn der Verbrennungsmotor 1 mit unterschiedlichen Kraftstoffen betrieben werden soll. Da das erfindungsgemässe Verfahren zur Gemischbildung und die entsprechenden Vorrichtungen keine Einbauten im Bereiche des Verbrennungsraumes 5 erforderlich machen, ist ein Betrieb mit Zusatzbrennstoffen oder anderen Brennstoffen leichter möglich.

## Patentansprüche

1. Verfahren zur Bildung eines turbulenten Kraftstoff-Luft-Gemisches im Verbrennungsraum (5) jedes Zylinders (2) eines ventilgesteuerten Verbrennungsmotors (1), wobei ein gasförmiger Kraftstoff einer Düse (13) zugeführt wird, in dieser Düse (13) aus dem Kraftstoff ein mit hoher Geschwindigkeit in Richtung des Verbrennungsraumes (5) strömender Gasstrahl (15) gebildet wird und der gasförmige Kraftstoff mit Luft vermischt und im Verbrennungsraum (5) verbrannt wird, **dadurch gekennzeichnet, dass** der gasförmige Kraftstoff als kohärenter Gasstrahl (15) ohne wesentliche Vermischung mit der Luft durch den Einlasskanal (6) geblasen wird, dann der Gasstrahl (15) durch den Ringspalt (8) eines offenen Ventils (7) geführt und direkt in den Verbrennungsraum (5) eingeblasen wird, wobei der kohärente Gasstrahl (15) derart ausgerichtet ist, dass er auf eine Wandung des Verbrennungsraums (5) prallt, durch den Wandaufprall der Gasstrahl (15) aufgefächert und aufgelöst wird und durch die kinetische Energie des kohärenten Gasstrahles (15) im Verbrennungsraum (5) eine hohe Turbulenz erzeugt wird, und der im Gasstrahl (15) enthaltene Kraftstoff im Verbrennungsraum (5) mit der Luft vermischt wird.

2. Verfahren nach Patentanspruch 1, **dadurch gekennzeichnet, dass** der Gasstrahl (15) intermittierend und in funktionaler Abhängigkeit von der Oeffnungszeit des Einlassventils (7) eingeblasen wird.

3. Verfahren nach Patentanspruch 1 oder 2, **dadurch gekennzeichnet, dass** der Gasstrahl (15) mit einer Geschwindigkeit von mindestens 250 m/s in den Einlasskanal eingeblasen wird.

4. Verfahren nach einem der Patentansprüche 1 bis 3, **dadurch gekennzeichnet, dass** der Gasstrahl (15) schräg und/oder exzentrisch zur Längsachse (19) des Verbrennungsraumes (5) in den Verbrennungsraum (5) eingeblasen wird, und im Verbrennungsraum (5) eine Drallströmung erzeugt wird.

5. Verfahren nach einem der Patentansprüche 1 bis 4, **dadurch gekennzeichnet, dass** die für jeden Verbrennungszyklus oder Arbeitsvorgang im Verbrennungsraum (5) benötigte Menge an gasförmigem Kraftstoff auf mehrere Gasstrahlen (15) verteilt wird.

6. Verfahren nach Patentanspruch 2, **dadurch gekennzeichnet, dass** die Strömungsdauer jedes Impulses des intermitierenden Gasstrahles (15) zeitlich so gesteuert wird, dass gegenüber der Oeffnungsdauer des Einlassventils (7) eine Vor- und/oder Nacheinblasung von Kraftstoff in den Einlasskanal (6) entsteht.

7. Vorrichtung zur Durchführung des Verfahrens nach Patentanspruch 1 an einem Verbrennungsmotor (1) für die interne Verbrennung von gasförmigem Kraftstoff, mit Zylinder-Kolben-Einheiten (2, 3) mit je einem Verbrennungsraum (15), Ein- und Auslassventilen (7), Einund Auslasskanälen (6), sowie Luft- und Kraftstoffzuführungen (10, 11), wobei im Bereiche mindestens eines Einlasskanals (6) jedes Zylinders (2), vor dem Ventilsitz (12) des Einlassventils (7), eine Einblasdüse (13) für gasförmigen Kraftstoff angeordnet ist, **dadurch gekennzeichnet, dass** die Einblasdüse (13) einen Austrittskanal (14) aufweist und derart ausgestaltet ist, dass ein Gasstrahl (15) ausblasbar ist, welcher in den Einlasskanal (6) gerichtet ist, die Strömungsachse (16) des aus dem Austrittskanal (14) austretenden Gasstrahles (15) durch den Ringspalt (8) eines geöffneten Ventils (7) verläuft und direkt auf eine Wandung des Verbrennungsraums (5) gerichtet ist, um den Gasstrahl (15) durch den Wandaufprall aufzufächern und aufzulösen.

8. Vorrichtung nach Patentanspruch 7, **dadurch gekennzeichnet, dass** der Austrittskanal (14) an der Gaseinblasdüse (13) ein Beschleunigungskanal für den gasförmigen Kraftstoff ist, und der Endbereich (17) des Austrittskanales (14) als Laval-Düse ausgebildet ist.

9. Vorrichtung nach Patentanspruch 7 oder 8, **dadurch gekennzeichnet, dass** die Gaseinblasdüse (13) mit einem Magnetventil (18) zur Unterbrechung des Gasstrahles (15) versehen ist, und dieses Magnetventil (18) über eine Steuerung mit der Ventilsteuerung verbunden ist.

10. Vorrichtung nach einem der Patentansprüche 7 bis 9, **dadurch gekennzeichnet, dass** der aus der Gaseinblasdüse (13) austretende Gasstrahl (15) kompakt und kohärent ist.

11. Vorrichtung nach einem der Patentansprüche 7 bis 10, **dadurch gekennzeichnet, dass** pro Einlasskanal (6) mehrere Gaseinblasdüsen (13) angeordnet sind, und/oder jede Gaseinblasdüse (13) mehrere Austrittskanäle (14) für Gasstrahlen (15) aufweist.

12. Vorrichtung nach einem der Patentansprüche 7 bis 11, **dadurch gekennzeichnet, dass** der Gaseinblasdüse (13) im Einlasskanal (6) eine weitere Einrichtung zur Beimischung von Kraftstoff zur Luft vorgelagert ist.

13. Vorrichtung nach einem der Patentansprüche 7 bis 12, **dadurch gekennzeichnet, dass** die Längsachse des Austrittskanales (14) an der Gaseinblasdüse (13) gegenüber der Längsachse dieser Gaseinblasdüse (13) abgewinkelt ist.

## Claims

1. Method for the formation of a turbulent fuel/air mixture in the combustion chamber (5) of each cylinder (2) of a valve-controlled combustion engine (1), a gaseous fuel being fed to a nozzle (13), a gas jet (15) flowing at high speed in the direction of the combustion chamber (5) being formed in this nozzle (13) from the fuel, and the gaseous fuel being mixed with air and burnt in the combustion chamber (5), **characterized in that** the gaseous fuel is blown through the inlet duct (6) as a coherent gas jet (15) without mixing significantly with the air, after which the gas jet (15) is passed through the annular gap (8) of an open valve (7) and injected directly into the combustion chamber (5), the coherent gas jet (15) being aligned in such a way that it strikes a wall of the combustion chamber (5), the gas jet (15) is spread out and broken up by the wall impact, and a high turbulence is produced in the combustion chamber (5) by the kinetic energy of the coherent gas jet (15), and the fuel contained in the gas jet (15) is mixed in the combustion chamber (5) with the air.

2. Method according to Patent Claim 1, **characterized in that** the gas jet (15) is injected intermittently and as a function of the opening time of the inlet valve (7).

3. Method according to Patent Claim 1 or 2, **characterized in that** the gas jet (15) is injected into the inlet duct at a velocity of at least 250 m/s.

4. Method according to one of Patent Claims 1 to 3, **characterized in that** the gas jet (15) is injected into the combustion chamber (5) obliquely and/or eccentrically to the longitudinal axis (19) of the combustion chamber (5), and a swirling flow is produced in the combustion chamber- (5).

5. Method according to one of Patent Claims 1 to 4, **characterized in that** the quantity of gaseous fuel required for each combustion cycle or operation in the combustion chamber (5) is divided between a plurality of gas jets (15).

6. Method according to Patent Claim 2, **characterized in that** the timing of the duration of flow of each pulse of the intermittent gas jet (15) is controlled in such a way that it gives rise to pre- and/or post-injection of fuel into the inlet duct (6) in relation to the duration of opening of the inlet valve (7).

7. Apparatus for carrying out the method according to Patent Claim 1 on a combustion engine (1) for the internal combustion of gaseous fuel, with cylinder-piston units (2, 3), each with a combustion chamber (15), inlet and exhaust valves (7), inlet and exhaust ducts (6) and air and fuel feeds (10, 11), an injection nozzle (13) for gaseous fuel being arranged in the region of at least one inlet duct (6) of each cylinder (2), upstream of the valve seat (12) of the inlet valve (7), **characterized in that** the injection nozzle (13) has an outlet duct (14) and is configured in such a way that it is possible to eject a gas jet (15) that is directed into the inlet duct (6), the flow axis (16) of the gas jet (15) emerging from the outlet duct (14) passes through the annular gap (8) of an opened valve (7) and is directed directly at a wall of the combustion chamber (5) in order to spread out and break up the gas jet (15) by means of the wall impact.

8. Apparatus according to Patent Claim 7, **characterized in that** the outlet duct (14) on the gas injection nozzle (13) is an acceleration duct for the gaseous fuel, and the end region (17) of the outlet duct (14) is designed as a Laval nozzle.

9. Apparatus according to Patent Claim 7 or 8, **characterized in that** the gas injection nozzle (13) is provided with a solenoid valve (18) for interrupting the gas jet (15), and this solenoid valve (18) is connected to the valve timing system by a control system.

10. Apparatus according to one of Patent Claims 7 to 9, **characterized in that** the gas jet (15) emerging from the gas injection nozzle (13) is compact and coherent.

11. Apparatus according to one of Patent Claims 7 to 10, **characterized in that** a plurality of gas injection nozzles (13) is arranged for each inlet duct (6), and/or each gas injection nozzle (13) has a plurality of outlet ducts (14) for gas jets (15).

12. Apparatus according to one of Patent Claims 7 to 11, **characterized in that** a further device for mixing fuel into the air is positioned ahead of the gas injection nozzle (13) in the inlet duct (6).

13. Apparatus according to one of Patent Claims 7 to 12, **characterized in that** the longitudinal axis of the outlet duct (14) on the gas injection nozzle (13) is angled relative to the longitudinal axis of this gas injection nozzle (13).

## Revendications

1. Procédé pour former un mélange carburant-air turbulent dans la chambre de combustion (5) de chaque cylindre (2) d'un moteur à combustion interne (1) commandé par les soupapes, selon lequel on fournit du carburant à l'état gazeux à une buse (13) formant avec le carburant un jet de gaz (15) circulant à grande vitesse en direction de la chambre de combustion (5) dans laquelle le carburant gazeux se mélange à l'air pour être brûlé,
**caractérisé en ce que**
le carburant gazeux est soufflé avec l'air à travers le canal d'admission (6) sous la forme d'un jet de gaz (15) cohérent sans mélange important, puis le jet de gaz (15) est conduit à travers l'intervalle annulaire (8) d'une soupape ouverte (7) pour être soufflé directement dans la chambre de combustion (5),
le jet de gaz (15), cohérent, est dirigé pour rebondir sur une paroi de la chambre de combustion (5) et l'impact sur la paroi ouvre le jet de gaz (15) sous la forme d'un éventail et le libère, et l'énergie cinétique du jet de gaz cohérent (15) engendre une forte turbulence dans la chambre de combustion (5) et le carburant contenu dans le jet de gaz (15) se mélange à l'air dans la chambre de combustion (5).

2. Procédé selon la revendication 1,
**caractérisé en ce que**
le jet de gaz (15) est soufflé de manière intermittente et en relation fonctionnelle avec la durée d'ouverture de la soupape d'admission (7).

3. Procédé selon l'une quelconque des revendications 1 ou 2,
**caractérisé en ce que**
le jet de gaz (15) est soufflé dans le canal d'admission à une vitesse d'au moins 250 m/s.

4. Procédé selon l'une quelconque des revendications 1 à 3,
**caractérisé en ce que**
le jet de gaz (15) est dirigé en biais et/ou de manière excentrée par rapport à l'axe longitudinal (19) de la chambre de combustion (5) pour être soufflé dans la chambre de combustion (5) et y créer un écoulement en rotation.

5. Procédé selon l'une quelconque des revendications 1 à 4,
**caractérisé en ce que**
la quantité de carburant à l'état gazeux, nécessaire à un cycle de combustion ou à une opération de travail dans la chambre de combustion (5), est répartie entre plusieurs jets de gaz (15).

6. Procédé selon la revendication 2,
**caractérisé en ce que**
la durée de l'écoulement de chaque impulsion du jet de gaz (15) intermittent est commandée pour avoir un soufflage anticipé et/ou un soufflage retardé de carburant dans le canal d'admission (6) par rapport à la durée d'ouverture de la soupape d'admission (7).

7. Dispositif pour la mise en oeuvre du procédé selon la revendication 1 appliqué à un moteur à combustion interne (1) pour brûler de manière interne un carburant gazeux, comportant des ensembles pistons/cylindres (1, 2) et chaque fois une chambre de combustion (15), des soupapes d'admission et d'échappement (7), des canaux d'admission et d'échappement (6) ainsi que des alimentations en air et en carburant (10, 11) et, au niveau d'au moins un canal d'admission (6) de chaque cylindre (2), en amont du siège (12) de la soupape d'admission (7), une buse de soufflage (13) pour du carburant à l'état gazeux,
**caractérisé en ce que**
la buse de soufflage (13) comporte un canal de sortie (14) et elle est réalisée pour souffler un jet de gaz (15) dirigé dans le canal d'admission (6), l'axe d'écoulement (16) du jet de gaz (15) sortant du canal (14) passant par l'intervalle annulaire (8) d'une soupape (7) ouverte pour être dirigé directement contre la paroi de la chambre de combustion (5) et étaler et libérer le jet de gaz (15) par son impact sur la paroi.

8. Dispositif selon la revendication 7,
**caractérisé en ce que**
le canal de sortie (14) de la buse de soufflage de gaz (13) est un canal d'accélération pour le carburant à l'état gazeux et la zone d'extrémité (17) du canal de sortie (14) est une buse Laval.

9. Dispositif selon l'une quelconque des revendications 7 ou 8,
**caractérisé en ce que**
la buse de soufflage de gaz (13) comporte une électrovanne (18) pour couper le jet de gaz (15) et cette électrovanne (18) est reliée par une commande à la commande de soupape.

10. Dispositif selon l'une quelconque des revendications 7 à 9,
**caractérisé en ce que**
le jet de gaz (15) sortant de la buse de soufflage de gaz (13) est un jet compact et cohérent.

11. Dispositif selon l'une quelconque des revendications 7 à 10,
**caractérisé par**
plusieurs buses de soufflage de gaz (13) par canal d'admission (6) et/ou chaque buse de soufflage de gaz (13) comporte plusieurs canaux de sortie (14) pour les jets de gaz (15).

12. Dispositif selon l'une quelconque des revendications 7 à 11,
**caractérisé en ce que**
la buse de soufflage de gaz (13) dans le canal d'admission (6) est précédée par une autre installation pour mélanger du carburant à l'air.

13. Dispositif selon l'une quelconque des revendications 7 à 12,
**caractérisé en ce que**
l'axe longitudinal du canal de sortie (14) de la buse de soufflage de gaz (13) est incliné par rapport à l'axe longitudinal de cette buse de soufflage de gaz (13).
